(19) **Europäisches Patentamt European Patent Office Office européen des brevets**

(11) **EP 4 359 203 B1**

(12) **FASCICULE DE BREVET EUROPEEN**

(45) Date de publication et mention de la délivrance du brevet:
**21.05.2025 Bulletin 2025/21**

(21) Numéro de dépôt: **22743522.9**

(22) Date de dépôt: **15.06.2022**

(51) Classification Internationale des Brevets (IPC):
**B29C 64/40** *(2017.01)* **B29C 64/118** *(2017.01)*
**B33Y 70/00** *(2020.01)* **C08F 293/00** *(2006.01)*
**B33Y 10/00** *(2015.01)* **C08L 53/00** *(2006.01)*

(52) Classification Coopérative des Brevets (CPC):
(C-Sets disponibles)
**C08F 293/005; B29C 64/40; B33Y 70/00; C08L 53/00;** C08F 2438/02 (Cont.)

(86) Numéro de dépôt international:
**PCT/FR2022/051148**

(87) Numéro de publication internationale:
**WO 2022/269167 (29.12.2022 Gazette 2022/52)**

(54) **UTILISATION DE COPOLYMERES MULTI BLOCS EN TANT QUE MATERIAU SACRIFICIEL DANS UN PROCEDE D'IMPRESSION 3D**

VERWENDUNG VON MULTIBLOCKCOPOLYMEREN ALS OPFERMATERIAL IN EINEM 3D-DRUCKVERFAHREN

USE OF MULTIBLOCK COPOLYMERS AS SACRIFICIAL MATERIAL IN A 3D PRINTING PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2021 FR 2106675**
**07.10.2021 FR 2110633**

(43) Date de publication de la demande:
**01.05.2024 Bulletin 2024/18**

(73) Titulaire: **ARKEMA FRANCE**
**92800 Puteaux (FR)**

(72) Inventeurs:
• **BROCAS, Anne-Laure**
**64170 LACQ (FR)**
• **CAZAUMAYOU, Sylvie**
**64170 LACQ (FR)**

(56) Documents cités:
**WO-A1-2016/102802** **WO-A1-2018/049365**
**US-A1- 2017 369 623**

(52) Classification Coopérative des Brevets (CPC):
(Cont.)

C-Sets
**C08L 53/00, C08L 53/00**

**Description**

DOMAINE DE L'INVENTION

La présente invention se rapporte à l'utilisation de copolymères multi blocs ou de compositions de copolymères multi blocs en tant que matériaux sacrificiel du modelage en 3D par dépôt de filaments en fusion. Seuls les copolymères à blocs sont utilisés dans cette invention. Ceci exclu tout autre polymère à architecture ne se présentant pas sous forme de copolymères à blocs.

De tels matériaux présentent une solubilisation ou une dispersibilité rapide dans une variété de solvant tout en combinant les propriétés thermomécaniques idéales pour en faire des fils ou joncs utilisables en impression 3D (modelage par dépôt de filaments en fusion) pour supporter des polymères constitutifs de la pièce à fabriquer, y compris des polymères de haute température de transition vitreuse (Tg), avant d'être éliminés par dissolution dans un solvant.

L'impression tridimensionnelle (ou impression 3D) permet de fabriquer de manière additive (en anglais : « additive manufacturing » ou AM) un objet réel à partir d'un objet virtuel. Elle est basée sur la découpe de l'objet virtuel 3D en lamelles 2D de très fine épaisseur. Ces fines lamelles sont déposées une à une en les fixant sur les précédentes, ce qui reconstitue l'objet réel. Parmi les matériaux constitutifs de l'objet, on trouve les matériaux plastique (notamment l'acrylonitrile butadiène styrène (ou ABS) et l'acide polylactique (ou PLA)), mais aussi des Polyaryleetheréctones (PAEK), Poletheryimides (PEI), la cire, le métal ou les céramiques. Des exemples de techniques additives sont le dépôt de filaments en fusion (« Fuse filament fabrication » (FFF)) et le frittage par laser (en anglais « laser sintering »).

Le modelage par dépôt de filaments en fusion est une technique qui consiste à faire fondre un filament à travers une buse d'extrusion. De cette buse en sort un filament en fusion, d'un diamètre de l'ordre du millimètre. Ce fil est déposé en ligne et vient se coller par re-fusion sur ce qui a été déposé au préalable. Cette technique permet de créer des pièces en bonne matière, disposant de caractéristiques mécaniques, thermiques et d'une stabilité identique aux pièces thermoplastiques injectées et souvent plus légères. Dans le cas des polymères, pour des raisons de consolidation mécanique, cette technique nécessite un support à la production des pièces, lui aussi extrudé conjointement. Ce support de construction est constitué dans une autre matière que celle constitutive de l'objet créé, support qui est éliminée dudit objet, lorsque le processus de construction de ce dernier est fini.

Le support de construction est généralement une composition polymérique soluble ou dispersible répondant à un cahier des charges bien précis. Parmi les propriétés recherchées, outre la résistance mécanique, la température de transition vitreuse du copolymère qui doit être proche du matériau à imprimer, sa stabilité thermique ou sa facilité de mise en œuvre, la cinétique de solubilisation ou de dispersion dans une variété de solvant et en particulier de l'eau est de première importance. Le matériau doit en outre présenter une bonne conservation, lorsque le solvant de solubilisation ou de dispersion est l'eau. Cette dernière caractéristique n'est pas toujours facile à établir car les compositions et filaments hydrosoluble ou hydrodispersibles dans l'eau peuvent s'avérer difficile à conserver en atmosphère humide. On observe des prises en masse des granulés ou un collage des filaments sur les bobines dû à la présence d'humidité ambiante lors du stockage.

ARRIERE-PLAN TECHNIQUE

Cette technique d'impression 3D, nécessite des matériaux supports permettant la construction de pièces complexes, ceci est par exemple décrit dans WO2010/045147. Parmi les autres matériaux supports solubles dans l'eau, on retrouve :

- Le polyvinyl alcool
- Le BVOH copolymère butènediol/alcool vinylique.
- Les copolymères (méth)acryliques.

Ces compositions de polymères supports comprennent toujours plusieurs copolymères, dont le rôle est d'ajuster solubilité, propriétés mécaniques ou d'autres paramètres, en résultant plus de difficultés de mise au point.

Parmi les autres matériaux supports solubles dans d'autres solvants, on peut citer par exemple le polystyrène impact (HIPS), soluble dans le limonène.

Il est connu dans l'art antérieur que le support doit présenter une température de transition vitreuse (Tg) relativement proche de celle du polymère constitutif de l'objet à imprimer dans un ordre de grandeur inférieur de 10°C de la Tg du polymère constitutif de l'objet à imprimer.

Dans le cas contraire, la construction de la pièce à imprimer ne se fait pas correctement car le matériau support présente trop de fluage. Ceci est expliqué par exemple dans US5866058.

De façon surprenante, la demanderesse a constaté que lorsque les copolymères à blocs sont utilisés seuls ou en combinaison comme matériau support sacrificiel, cette condition de proximité des Tg matériaux à imprimer-matériau support n'est plus nécessaire. Cela présente un avantage car la définition des autres caractéristiques du polymère support présente beaucoup plus de possibilités. Il est ainsi plus facile d'ajuster les autres paramètres tels que mécaniques ou de solubilisation en milieu aqueux sans se soucier des Tg du polymère sacrificiel support, à conditions qu'elles restent inférieures à celle du polymère constitutif de l'objet à imprimer. Ainsi avec des copolymères à blocs dont la tg la plus haute d'un des blocs est par exemple de 50°C, on peut utiliser de tels copolymères à blocs comme matériau support pour construire des objets en matériau de Tg allant de 50°C à 200°C. Associés à d'autres copolymères à blocs présentant au moins un bloc dont la température de transition vitreuse (Tg) est inférieure à 0°C et au moins un bloc dont la Tg est supérieure à 0°C, ils offrent une composition qui en outre présente de très bonnes propriétés mécaniques.

Ceci offre de nouvelles possibilités pour imprimer des objets constitués de poly aryle éther cétones (PAEK), de polyéther imides (PEI), de polamide-imide (PAI), Polysulfone (PSU), poly(ethersulfone) (PES), poly(phenylene sulfide) (PPS) pour lesquels le choix de polymères sacrificiels support est très limité et présente d'autres désavantages.

Résumé de l'invention :

Utilisation d'au moins un copolymère multi blocs (I) en tant que matériau sacrificiel dans un procédé d'impression 3D de polymères dont la Tg est comprise entre 140 et 200°C Choisis parmi les PEEK, PEKK, PEI, PAI, PSU, et PPS, au moins un copolymère(s) multi blocs (I) comprenant au moins un bloc constitué de i monomères $M_i$ enchaînés de façon statistique, i étant un nombre entier variant de 2 à 5, bornes incluses et d'au moins un bloc constitué de j monomères $M_j$ enchaînés de façon statistique, j étant un nombre entier variant de 2 à 5, bornes incluses , $M_i$ étant sélectionné parmi des monomères A dont la Tg de leurs homopolymères est inférieure à 0°C et des monomères B hydrophiles , la proportion massique de A variant de 80 à 95 % et la proportion massique de B variant de 5 à 20 %.

$M_j$ étant sélectionné parmi des monomères C dont la Tg de leurs homopolymères est inférieure à 0°C, des monomères D dont la Tg de leurs homopolymères est supérieure à 25°C et des monomères E hydrophiles, les proportions massiques des monomères C, D, E étant comprises respectivement entre 25-35 %, 25-35 %, 35-45 %.

Description détaillée

Il y tout lieu de penser que tout type de monomères présentant les caractéristiques et les proportions associées en copolymères à blocs (I) tels que décrit dans le résumé de l'invention conduisent à un comportement favorable à la résolution des problèmes techniques tels que décrits dans l'arrière-plan technologique.

Ceci ne préjuge pas de la chimie utilisée.

Cependant, peu de chimie permettent la préparation de telles structures en copolymères à blocs.

On peut par exemple préparer des blocs réactifs par polycondensation ou ouverture de cycle de telle sorte que d'autres blocs puissent être enchainés dans une deuxième étape, avec des choix et proportions des monomères selon le résumé de l'invention.

On peut aussi préparer les blocs par polymérisation radicalaire ou anionique de la même façon c'est-à-dire blocs par blocs de telle sorte que d'autres blocs puissent être enchainés par étapes avec des choix et proportions des monomères selon le résumé de l'invention.

Parmi les techniques préférées, on utilisera les polymérisations radicalaires contrôlées car elles permettent d'obtenir en étapes séquentielles au sein d'une même opération de procédé les copolymères à blocs.

On peut citer la RAFT (Radical Addition Fragmentation Transfert en Anglais) ou la NMP (Nitroxide Mediated Polymerization, polymérisation contrôlée par les nitroxydes) de façon non limitative.

De préférence on choisira la NMP, et de préférence celle mettant en œuvre le contre radical N-tert-Butyl-1-diethylphosphono-2,2- dimethylpropyl Nitroxide. Un tel contre radical est largement décrit et utilisé dans la littérature et mis en œuvre au travers de l'alcoxyamine ou polyalcoxyamines de l'acide 2-([tert-butyl[1-(diethoxyphosphoryl)-2,2-dimethylpropyl]amino]oxy)-2 methylpropionique.

S'agissant des monomères des copolymères à blocs (I) tels que décrits dans le résumé de l'invention, les monomères A seront choisis parmi les suivants :

Les (meth)acrylates d'alkyle oxygéné ou non avec une chaine en C4-C18, linéaire ou substituée et en particulier les monomères suivants : Acrylate de butyle (Abu), acrylate de 2 éthyle hexyle (AE2H), acrylate de méthoxyéthyle (AME), méthacrylate de Lauryle (MAlau), méthacrylate de stéaryle (MAS).

Les monomères B seront choisis parmi les suivants: acide acrylique (AA), acide méthacrylique (AMA), de styrène sulfonate, de l'acide 2-acrylamido-2-propane sulfonique. Les monomères C seront choisis parmi les suivants :

Les (meth)acrylates d'alkyle oxygéné ou non avec une chaine en C4-C18, linéaire ou substituée et en particulier les monomères suivants : Acrylate de butyle (Abu), acrylate de 2 éthyle hexyle (AE2H), acrylate de méthoxyéthyle (AME), méthacrylate de LAuryle (MAlau), méthacrylate de stéaryle (MAS).

Les monomères D seront choisis parmi les suivants:

Styrène (S) ; Méthacrylate de méthyle (MMA), Acrylonitrile (AN), acrylate d'isobornyle.

Les monomères E seront choisis parmi les suivants: acide acrylique (AA), acide méthacrylique (AMA).

De préférence, A est l'acrylate de butyle ou de 2-éthyle hexyle, et de façon encore préférée l'acrylate de butyle, B est l'acide acrylique ou l'acide méthacrylique, C est l'acrylate de butyle ou de 2-éthyle hexyle, et de façon encore préférée l'acrylate de butyle, D est le Styrène, l'acrylonitrile le Méthacrylate de méthyle ou l'acrylate d'isobornyle, et de façon encore préférée le styrène ou l'acrylate d'isobornyle, E est l'acide acrylique ou l'acide méthacrylique.

Les polymères qui peuvent être imprimés en utilisant les compositions de polymères sacrificiels de l'invention présentent des températures de transition vitreuse (Tg) supérieurs à 50°C parmi lesquels on peut citer de façon non limitative le polyacide lactique (PLA), l'acrylonitrile butadiène styrène (ABS, l'acrylonitrile styrène acrylonitrile (ASA), les polyamides (PA), polycarbonate (PC), le poly méthacrylate de méthyle (PMMA), les copolyesters tels que le polyéthylène téréphtalate (PET), le poly butylène téréphtalate (PBT), les polyoléfines (PE, PP),et pour les polymères de haute Tg comprise entre 140 et 200°C les poly aryle éther cétones (PAEK),dénommé PEEK, PEKK, PEK, PEKEKK, PEEKK,PEKK selon les enchainements aryle-éther cétones, les polyéther imides (PEI), de polamide-imide (PAI), les Polysulfone (PSU), les poly(ethersulfone) (PES), ou encore les poly(phenylene sulfide) (PPS).

L'utilisation des copolymères à blocs en tant que matériaux hydrosolubles support des polymères haute température tels que les PEEK, PEKK, PEI, PAI PSU, et PPS est particulièrement utile. Les autres polymères à plus basses Tg cités peuvent également être imprimés, mais d'autres solutions existent déjà.

Ainsi, les préférences de l'invention vont à l'utilisation de copolymères à blocs tels que décrits dans le résumé de l'invention pour l'impression de polymères dont la Tg est comprise entre 50 et 200°C, et de préférence dont la Tg est comprise entre 140 à 200°C.

Les copolymères à blocs (I) tels que décrits dans le résumé de l'invention sont de préférences des copolymères di ou tri blocs, et de façon encore préférée des copolymères di blocs. Dans la définition de ces copolymères, i peut prendre des valeurs comprises entre 2 et 5, de préférence entre 2 à 3, bornes incluses et de façon encore préférée 2. Dans la définition de ces copolymères, j peut prendre des valeurs comprises entre 2 et 5, de préférence entre 2 et 3, bornes incluses, et de préférence 3.

Ils présentent une proportion massique des blocs constitués des monomères de la famille A et B variant de 5 à 40% (bloc 1), de préférence entre 10 et 30 % et une proportion massique des blocs constitués des monomères C, D, et E variant de 50 à 90 % (bloc 2), de préférence entre 60 et 80 %.

La balance de propriété associée aux choix des monomères sélectionnés dans l'invention permet à ces copolymères d'être solubles dans des solvants choisis parmi l'eau, le DMSO, les alcools, ou encore les cétones de façon non limitative. L'eau est le solvant préféré dans une gamme de pH pouvant varier de 7 à 12 et de préférence de 10 à 12.

Outre les copolymères à blocs (I) utilisés dans l'invention ils peuvent être associés à au moins un copolymère à blocs (II). Ainsi l'invention concerne également l'utilisation de l'association des copolymères (I) et (II) en tant que composition de matériau sacrificiel dans un procédé d'impression 3D

Les copolymères à blocs (II) sont de préférences des copolymères di ou tri blocs, et de façon encore préférée des copolymères tri blocs. Ils sont préparés avec le même type de procédé et de chimie de polymérisation et selon le même type de préférences de procédé et de chimie de polymérisation que pour les copolymères à blocs (I).

Les copolymères (II) présentent au moins un bloc dont la température de transition vitreuse (Tg) est inférieure à 0°C et au moins un bloc dont la Tg est supérieure à 0°C S'agissant des monomères des copolymères à blocs (II,) ils seront choisis parmi les suivants :

Pour les blocs présentant une Tg inférieure à 0°C, l'acrylate de butyle, de 2 éthyle hexyle et de préférence l'acrylate de butyle.

Pour les blocs présentant une Tg supérieure à 0°C, le méthacrylate de méthyle, le styrène, l'acide acrylique, l'acide méthacrylique, la diméthyle acrylamide, l'isopropylacrylamide, l'acrylate d'isobornyle, et de préférence le méthacrylate de méthyle, la diméthyle acrylamide, l'acrylate d'isobornyle et l'isopropyl acrylamide avec des proportions massiques dans le cas de la diméthyle acrylamide ou de l'isopropylacrylamide comprise en 1 et 30% massique et de préférence entre 5 et 15 % par rapport au total de (II).

Lorsque le solvant de dissolution ou de dispersion est l'eau, les compositions de l'invention en présence ou non du copolymère (II) présentent une très bonne solubilisation à des pH élevés, 12 par exemple et une bien moins bonne solubilisation à pH 7. Ceci procure un avantage car les bobines de fils fabriquées avec ces copolymères présentent une meilleure stabilité au stockage en particulier en atmosphère humide.

Les copolymères (I) tels que décrits dans le résumé de l'invention présentent une masse moléculaire en poids comprise entre 80000 et 150000 g/mole et indice de dispersité compris entre 1 et 3, et de préférence entre 1,5 et 2,5) mesurée par SEC à l'aide d'étalons polystyrène. Ils peuvent être mélangés à d'autres copolymères à blocs pour ajuster certaines propriétés.

Les copolymères à blocs (II) présentent une masse moléculaire en poids comprise entre 50000 et 150000 g/mole et une dispersité comprise entre 1 et 3, et de préférence entre 1,5 et 2,5) mesurée par SEC à l'aide d'étalons polystyrène.

Ces copolymères à blocs (II) peuvent être utilisés dans l'utilisation de la composition dans des proportions variant de 1 à 50 % de préférences entre 3 et 15 % massique du poids total (I) + (II).

Les températures de transitions vitreuses (Tg) sont mesurées par DSC.

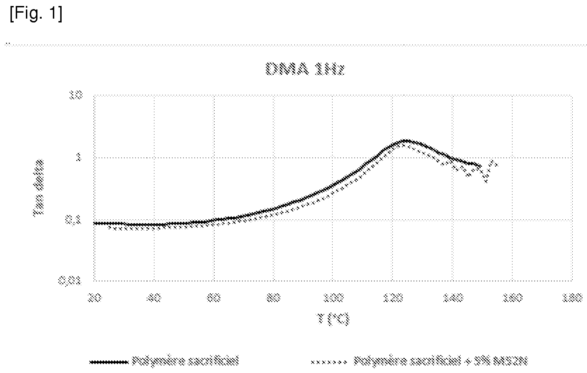

La figure 1 décrit le comportement en DMA d'un polymère sacrificiel (I) et de son association avec un copolymère (II) (polymère sacrificiel + 5% M52N)

Exemples :

Exemple 1 - Synthèse d'un copolymère (I) P(BA - AA) - b - P(BA - S - AMA)

Dans cet exemple on vise un copolymère di-bloc iMi-jMj, avec i= 2 et j=3 représenté mMnN-bloc-oOpPqQ.

Bloc 1 :

    M: Acrylate de butyle (Abu), m= 9% du bloc 1
    N: Acide acrylique (AA), n= 10 % du bloc 1.

Bloc 2 :

    O: Abu, o= 30 % du bloc 2.
    P: Styrene (S), p= 30 % du bloc 2
    Q: Acide méthacrylique (AMA), q= 40 % du bloc 2.

La synthèse de ce copolymère di bloc a lieu en deux étapes :

    1$^{er}$ bloc P(BA - AA) en masse puis stripping des monomères n'ayant pas réagi.
    2$^{nd}$ bloc P(BA - S - AMA) en solvant

1.1.Synthèse du bloc P(BA - AA)

La synthèse de ce premier bloc est réalisée par un procédé de polymérisation en masse au moyen d'un réacteur de type Ingénieur Büro

Réactifs :

- acrylate de butyle (BA) 208.7 g
- acide acrylique (AA) 22.9 g
- BlocBuilder® 2.51 g

On vise une masse moléculaire en nombre de 27 000 g/mol à 70% de conversion.

Les réactifs sont pesés puis mélangés sous agitation magnétique, on les introduit ensuite dans le réacteur par dépression. Le réacteur est mis sous agitation (250 tr/min). On dégaze le milieu en alternant trois une pression d'azote et le vide. La polymérisation se fait en trois paliers de température : 105°C pendant 60 min puis 110°C pendant 90 min. La durée de polymérisation est de 300 min. La conversion est suivie par extraits secs on prélève toutes les heures des échantillons. (thermo balance 150°C et étuve sous vide 125°C).

Quand la conversion visée est atteinte on baisse la température à 80°C. Une fois la consigne atteinte on va progressivement mettre l'équipement sous vide, les monomères non réagis vont être distillés (récupération dans pièges à azote liquide). On reste environ 90 min à 80°C et sous vide maximal, quand la distillation est terminée on baisse la consigne à 40°C, une fois cette consigne atteinte on introduit 160g de toluène (par dépression) afin de diluer le milieu. On laisse quelques heures sous agitation et à 40°C afin de bien homogénéiser la solution. Cette solution est ensuite récupérée.

1.2.Synthèse du bloc P(BA - S - AMA)

On travaille en procédé solvant, en utilisant un mélange éthanol / toluène ayant un ratio massique de 60 / 40. On travaille avec 45% de solvant par rapport à la charge totale.

On introduit un mélange BA / S / AMA ratio massique 30 / 30 / 40.

On vise un copolymère P(BA - AA) - b - P(BA - S- AMA) de composition massique 30 / 70 avec une conversion du 2nd bloc de 70%.

La charge est préparée comme indiquée ci-dessous :

1er bloc dilué dans éthanol : 154.8 g
BA / S / AMA : 154,8 / 154,8 / 206,4 (g)
Ethanol / Toluène : 329 / 219,5 (g)

Les masses molaires (équivalent PS) de ce copolymère sont les suivantes :

$$Mp=95000 \ g/mol$$

$$Mn=53000 \ g/mol$$

$$Mw=95000 \ g/mol$$

$$Ip=1,81$$

Dans les exemples 2 à 4 (inventions 2 à 4) on prépare des copolymères di-bloc iMi-jMj, avec i= 2 et j=3 représenté mMnN-bloc-oOpPqQ avec le même ratio de blocs et les mêmes proportions de monomères dans les mêmes conditions de synthèse que pour l'exemple 1. Dans le tableau 1 on sélectionne les monomères suivants :

[Tableau 1]

| tableau 1 | M | N | O | P | Q | Tg1 (°C) | Tg2 (°C) |
|---|---|---|---|---|---|---|---|
| Invention 1 | ABu | AA | Abu | S | AMA | -10 | 120 |
| Invention 2 | MAS | AA | Abu | S | AMA | -12 | 120 |
| Invention 3 | AE2H | AA | AE2H | S | AMA | -15 | 110 |
| Invention 4 | Abu | AMA | Abu | AN | AMA | -2 | 115 |

Les proportions m, n, o, p, q restant identiques à celles de l'exemple 1. Les polymères obtenus présentent des caractéristiques en masses moléculaires similaires ne variant pas plus de 10 % en comparaison de celles obtenues dans l'exemple 1.

Exemple 5 : tests dissolution.

Les tests sont effectués jusqu'à dissolution totale d'une pastille de matériau support de l'invention et des produits Aquasis® 120 et 180 disponibles sur le marché.

Les pastilles sont préparées par compression à 200°C. La dissolution des pastilles est effectuée à pH=7 et à pH=12 à une température de 60°C.

Exemple 6 : Extrusion de filaments :

Des bobines ont été formées directement à partir des matériaux de l'inventions.

Le filage est réalisé sur une extrudeuse monovis « Labtech LBE20-30/C » (diamètre de vis : 20mm). Un tireur à chenille est utilisé pour entrainer le jonc à vitesse constante (9,1-9,4m/min).

L'extrudeuse et la pompe à engrenages sont réglées à 190°C. La vitesse de vis de l'extrudeuse est 30-34 rpm, avec une pression P=55 bar.

Les produits témoins du commerce Aquasis® 120 et Aquasis® 180 sont disponibles sous forme de bobines de fils directement utilisable dans un dispositif d'impression 3D.

Exemple 7 : Impression 3D

L'impression de pièces a été faite sur une imprimante 3D « Original Prusa i3 MK3S+ ». D'autres imprimantes disponibles sont utilisables. La résine sacrificielle sous forme de filament selon invention ou le témoin Aquasis® 180 sont imprimés à une température de 250°C sur un plateau à 122°C pour la première couche puis 120°C pour les couches suivantes à une vitesse de 40mm/s. Les hauteurs de couches sont de 0,2mm et le remplissage 100% concentrique.
La résine sacrificielle sous forme de filament selon invention ou le témoin Aquasis® 120 sont imprimés à une température de 220°C sur un plateau à 120°C pour la première couche puis 105°C pour les couches suivantes à une vitesse de 10mm/s. Les hauteurs de couches sont de 0,2mm et le remplissage 100% concentrique.
Les résines des polymères des pièces à construire sont imprimées dans les conditions suivantes:

ABS, 3DFilTech : 250°C; 10mm/s.
PLA, eMotion TECH : 210°C; 10mm/s.
PEI: ThermaX PEI - Ultem 9085: 360°C; 10mm/s.
PEKK, ThermaX PEKK 3DXTech: 360°C; 10mm/s.

Les pièces construites sont des barreaux de 4cm X 1cm X 0,5 cm d'un barreau de polymère sacrificiel (invention et témoin) sur lequel un barreau de dimension identique est construit à l'aide du polymère cible (PLA, ABS, PEKK, PEI, etc).

Exemple 8 :

Une fois les pièces construites lorsque c'est possible selon l'utilisation des résines sacrificielles témoin ou de l'invention avec un polymère à imprimer donné, on plonge l'ensemble dans une eau à 60°C à un pH de 7 ou de 12 puis on note le temps pour que la totalité du matériau sacrificiel soit dissout. Lorsque l'essai est jugé impossible, cela signifie que la pièce à construire n'est pas conforme au modèle numérique 3D souhaité.
Les résultats de tests de dissolution et d'impression 3D sont donnés dans le tableau 2 :

[Tableau 2]

| Tableau 2 | T1 | T2 | polymères à imprimer | | | |
| --- | --- | --- | --- | --- | --- | --- |
| | | | PLA | ABS | PEKK | PEI |
| Invention 1 | > 120 | 70 | possible | possible | possible | possible |
| Invention 2 | > 120 | 80 | possible | possible | possible | possible |
| Invention 3 | > 120 | 80 | possible | possible | possible | possible |
| Invention 1 | > 120 | 85 | possible | possible | possible | possible |
| Aquasis® 120 | 40 | 75 | possible | possible | impossible | impossible |
| Aquasis® 180 | 60 | 120 | impossible | impossible | possible | possible |
| T1: Temps en minutes, dissolution totale à 60°C, eau pH 7 T2: Temps en minutes, dissolution totale à 60°C, eau pH 12 | | | | | | |

On constate que quel que soit le polymère à imprimer du tableau 2, les résines sacrificielles de l'invention permettent de supporter le polymère à imprimer.

Exemple 9 :

Les propriétés mécanique du polymère sacrificiel de l'invention 1 ont été évaluées avec un test de traction, avec ou sans addition de copolymère (II).
La mesure est faite sur un filament de longeur 14 cm et de diamètre 1,75 mm. L'allongement à la rupture est mesuré à l'aide d'un équipement type « Zwick Roell Z005 », avec un capteur 5 kN, vitesse : 5mm/min, distance entre les mors =61mm.
Les copolymères (II) testés sont commercialement disponibles sous la marque Nanostrength® avec les références M52N et M65N. Ces copolymères sont conformes en composition et masses moléculaires à la description qui est faite des copolymères (II). Ils ont été additionnés à hauteur de 5 et 10% massique.
Le tableau 3 reprend les évaluations effectuées:

[Tableau 3]

| | % Allongement à la rupture fraîchement extrudé | % Allongement à la rupture t+1mois |
|---|---|---|
| Matériau sacrificiel | 40 ± 5 | 20 ± 2 |
| Matériau sacrificiel + 5% M52N | 70 ± 6 | 68 ± 8 |
| Matériau sacrificiel + 10% M52N | 83 ± 25 | 80 ± 10 |
| Matériau sacrificiel + 5% M65N | 80 ± 17 | 75 ± 5 |

On constate que l'addition de copolymère (II) améliore l'allongement à la rupture d'une part, et que cet allongement est préservé après un mois de stockage d'autre part.

La dissolution d'une partie des matériaux de l'exemple 9, avec et sans copolymère (II) a été effectuée à 60 °C et pH 12 et montre qu'elle n'est affectée que dans de faibles proportions lorsque le copolymère (II) est présent comme le montre le tableau 4.

[Tableau 4]

| | Temps pour dissoudre 100% du matériau sacrificiel |
|---|---|
| Matériau sacrificiel (I) | 50 min |
| Matériau sacrificiel (I) + 5% M52N (II) | 55 min |
| Matériau sacrificiel (I) + 10% M52N (II) | 60 min |
| Matériau sacrificiel (I) + 5% M65N (II) | 60min |

Les matériaux des exemples 1 (I) et 9 (I+II) mettant en œuvre 5% de M52N ont été examinés par DMA (dynamical mechanical analysis). La courbe 1 montre que les comportements rhéologiques des deux matériaux sont très proches.

**Revendications**

1.  Utilisation d'au moins un copolymère multi blocs (I) en tant que matériau sacrificiel dans un procédé d'impression 3D de polymères dont la Tg est comprise entre 140 et 200 °C choisis parmi les PEEK, PEKK, PEK, PEKEKK, PEEKK, PEKK, PEI, PAI, PSU, et PPS, au moins un copolymère(s) multi blocs (I) comprenant au moins un bloc constitué de i monomères $M_i$ enchaînés de façon statistique, i étant un nombre entier variant de 2 à 5, bornes incluses et d'au moins un bloc constitué de j monomères $M_j$ enchaînés de façon statistique, j étant un nombre entier variant de 2 à 5, bornes incluses , $M_i$ étant sélectionné parmi des monomères A dont la Tg de leurs homopolymères est inférieure à 0°C et des monomères B hydrophiles , la proportion massique de A variant de 80 à 95 % et la proportion massique de B variant de 5 à 20 %. $M_j$ étant sélectionné parmi des monomères C dont la Tg de leurs homopolymères est inférieure à 0°C, des monomères D dont la Tg de leurs homopolymères est supérieure à 25°C et des monomères E hydrophiles, les proportions massiques des monomères C, D, E étant comprises respectivement entre 25-35 %, 25-35 %, 35-45 %.

2.  Utilisation selon la revendications 1 dans laquelle au moins un copolymère à blocs (II) est présent en proportion massique comprise entre 1 et 50% du poids total (I) + (II).

3.  Utilisation selon la revendication 1 ou 2 dans laquelle le au moins copolymère à bloc (I) est un copolymère di blocs ou un copolymère tri blocs.

4.  Utilisation selon la revendication 3 dans laquelle le copolymère à blocs (I) est un copolymère di-blocs.

5.  Utilisation selon la revendication 4 dans laquelle le copolymère di-blocs (I) présente une proportion massique des blocs constitués des monomères de la famille A et B variant de 5 à 40% (bloc 1) et une proportion massique des blocs constitués des monomères C, D, et E variant de 50 à 90 % (bloc 2).

6.  Utilisation selon les revendications 1 à 5 dans lesquelles le copolymère (II) présente au moins un bloc dont la température de transition vitreuse est inférieure à 0°C et au moins un bloc dont la température de transition vitreuse est supérieure à 0°C.

7. Utilisation selon la revendication 1 ou 2 dans laquelle les copolymères à blocs sont préparés par polymérisation radicalaire contrôlée.

8. Utilisation selon la revendication 7 dans laquelle les copolymères à blocs sont préparés par polymérisation radicalaire contrôlée par les nitroxides.

9. Utilisation selon la revendication 8 dans laquelle les copolymères à blocs sont préparés par polymérisation radicalaire contrôlée par le N-tert-Butyl-1-diethylphosphono-2,2- dimethylpropyl Nitroxide.

10. Utilisation selon la revendication 8 dans laquelle au moins un copolymère à blocs (I) est constitué de blocs 1 mettant en œuvre l'acrylate de butyle et l'acide acrylique et de blocs 2 mettant en œuvre l'acrylate de butyle, le styrène et l'acide méthacrylique.

11. Utilisation selon la revendication 1 dans laquelle au moins un copolymère à blocs (I) présente une masse moléculaire en poids comprise entre 80000 g/mole et 150000 g/mole.

12. Utilisation selon la revendication 2 dans laquelle le copolymère (II) présente une masse moléculaire en poids comprise entre 50000 g/mole et 150000 g/mole.

**Patentansprüche**

1. Verwendung von mindestens einem Multiblockcopolymer (I) als Opfermaterial bei einem 3D-Druckverfahren für Polymere mit einer Tg zwischen 140 und 200 °C, die aus PEEK, PEKK, PEK, PEKEKK, PEEKK, PEKK, PEI, PAI, PSU und PPS ausgewählt sind, wobei mindestens ein Multiblockcopolymer (I) mindestens einen Block, der aus i Monomeren $M_i$, die statistisch miteinander verknüpft sind, besteht, wobei i für eine ganze Zahl im Bereich von 2 bis 5 einschließlich der Grenzen steht, und mindestens einen Block, der aus j Monomeren $M_j$, die statistisch miteinander verknüpft sind, wobei j für eine ganze Zahl von 2 bis 5 einschließlich der Grenzen steht, umfasst, wobei $M_i$ aus Monomeren A mit einer Tg ihrer Homopolymere von weniger als 0 °C und hydrophilen Monomeren B ausgewählt ist, wobei der Massenanteil von A im Bereich von 80 bis 95 % liegt und der Massenanteil von B im Bereich von 5 bis 20 % liegt,
wobei $M_j$ aus Monomeren C mit einer Tg ihrer Homopolymere von weniger als 0 °C, Monomeren D mit einer Tg ihrer Homopolymere von mehr als 25 °C und hydrophilen Monomeren E ausgewählt ist, wobei die Massenanteile der Monomere C, D, E zwischen 25-35 %, 25-35 % bzw. 35-45 % liegen.

2. Verwendung nach Anspruch 1, wobei mindestens ein Blockcopolymer (II) in einem Massenanteil zwischen 1 und 50 % des Gesamtgewichts von (I) + (II) vorhanden ist.

3. Verwendung nach Anspruch 1 oder 2, wobei es sich bei dem mindestens einen Blockcopolymer (I) um ein Diblockcopolymer oder ein Triblockcopolymer handelt.

4. Verwendung nach Anspruch 3, wobei es sich bei dem Blockcopolymer (I) um ein Diblockcopolymer handelt.

5. Verwendung nach Anspruch 4, wobei das Diblockcopolymer (I) einen Massenanteil der Blöcke aus Monomeren der Familie A und B im Bereich von 5 bis 40 % (Block 1) und einen Massenanteil der Blöcke aus den Monomeren C, D und E im Bereich von 50 bis 90 % (Block 2) aufweist.

6. Verwendung nach Anspruch 1 bis 5, wobei das Copolymer (II) mindestens einen Block, dessen Glasübergangstemperatur kleiner als 0 °C ist, und mindestens einen Block, dessen Glasübergangstemperatur größer als 0 °C ist, aufweist.

7. Verwendung nach Anspruch 1 oder 2, wobei die Blockcopolymere durch kontrollierte radikalische Polymerisation hergestellt werden.

8. Verwendung nach Anspruch 7, wobei die Blockcopolymere durch Nitroxid-kontrollierte radikalische Polymerisation hergestellt werden.

9. Verwendung nach Anspruch 8, wobei die Blockcopolymere durch N-tert-Butyl-1-diethylphosphono-2,2-dimethylpropylnitroxid-kontrollierte radikalische Polymerisation hergestellt werden.

10. Verwendung nach Anspruch 8, wobei mindestens ein Blockcopolymer (I) aus Blöcken 1 unter Verwendung von Butylacrylat und Acrylsäure und Blöcken 2 unter Verwendung von Butylacrylat, Styrol und Methacrylsäure besteht.

11. Verwendung nach Anspruch 1, wobei mindestens ein Blockcopolymer (I) eine gewichtsmittlere Molmasse zwischen 80.000 g/mol und 150.000 g/mol aufweist.

12. Verwendung nach Anspruch 2, wobei das Copolymer (II) eine gewichtsmittlere Molmasse zwischen 50.000 g/mol und 150.000 g/mol aufweist.


**Claims**

1. Use of at least one multiblock copolymer (I) as sacrificial material in a process for 3D printing polymers the Tg of which is between 140 and 200°C chosen from PEEK, PEKK, PEK, PEKEKK, PEEKK, PEKK, PEI, PAI, PSU and PPS, at least one multiblock copolymer (I) comprising at least one block consisting of i monomers $M_i$ linked together randomly, i being an integer ranging from 2 to 5, limits included, and at least one block consisting of j monomers $M_j$ linked together randomly, j being an integer ranging from 2 to 5, limits included, $M_i$ being selected from monomers A the Tg of the homopolymers of which is less than 0°C and hydrophilic monomers B, the proportion by mass of A ranging from 80% to 95% and the proportion by mass of B ranging from 5% to 20%,
$M_j$ being selected from monomers C the Tg of the homopolymers of which is less than 0°C, monomers D the Tg of the homopolymers of which is greater than 25°C and hydrophilic monomers E, the proportions by mass of the monomers C, D and E being respectively between 25-35%, 25-35% and 35-45%.

2. Use according to Claim 1, wherein at least one block copolymer (II) is present in a proportion by mass of between 1% and 50% of the total weight of (I) + (II).

3. Use according to Claim 1 or 2, wherein the at least one block copolymer (I) is a diblock copolymer or a triblock copolymer.

4. Use according to Claim 3, wherein the block copolymer (I) is a diblock copolymer.

5. Use according to Claim 4, wherein the diblock copolymer (I) has a proportion by mass of the blocks consisting of the monomers of the family A and B ranging from 5% to 40% (block 1) and a proportion by mass of the blocks consisting of the monomers C, D and E ranging from 50% to 90% (block 2).

6. Use according to Claims 1 to 5, wherein the copolymer (II) has at least one block the glass transition temperature of which is less than 0°C and at least one block the glass transition temperature of which is greater than 0°C.

7. Use according to Claim 1 or 2, wherein the block copolymers are prepared by controlled radical polymerization.

8. Use according to Claim 7, wherein the block copolymers are prepared by nitroxide-mediated radical polymerization.

9. Use according to Claim 8, wherein the block copolymers are prepared by radical polymerization mediated by N-tert-butyl-1-diethylphosphono-2,2-dimethylpropyl nitroxide.

10. Use according to Claim 8, wherein at least one block copolymer (I) consists of blocks 1 employing butyl acrylate and acrylic acid and of blocks 2 employing butyl acrylate, styrene and methacrylic acid.

11. Use according to Claim 1, wherein at least one block copolymer (I) has a weight-average molecular mass of between 80 000 g/mol and 150 000 g/mol.

12. Use according to Claim 2, wherein the copolymer (II) has a weight-average molecular mass of between 50 000 g/mol and 150 000 g/mol.

[Fig. 1]

DMA 1Hz

────── Polymère sacrificiel        ×××××× Polymère sacrificiel + SN M32N

**EP 4 359 203 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010045147 A

- US 5866058 A